# FASCICULE DE BREVET EUROPEEN

(11) **EP 3 722 330 B1**
(45) Date de publication et mention de la délivrance du brevet: **10.08.2022**
(21) Numéro de dépôt: 20167871.1
(22) Date de dépôt: 03.04.2020
(51) Int. Cl.: C08F 8/28, C09D 133/14

(54) **NOUVEL ADDITIF À BASE DE POLYMÈRES HYDROSOLUBLES ET SES UTILISATIONS**
NEUER ZUSATZSTOFF AUF DER BASIS VON WASSERLÖSLICHEN POLYMEREN, UND SEINE ANWENDUNGSBEREICHE
NEW ADDITIVE MADE OF WATER-SOLUBLE POLYMERS AND USES THEREOF

(30) Priorité: 10.04.2019 FR 1903832
(43) Date de publication de la demande: 14.10.2020
(73) Titulaire: SPCM SA, 42160 Andrézieux-Bouthéon (FR)
(72) Inventeur: HUND, René, 42160 Andrézieux Bouthéon (FR); FAUCHER, Gatien, 42160 Andrézieux Bouthéon (FR); FOUGEROUSE, Damien, 42160 Andrézieux Bouthéon (FR)
(74) Mandataire: Cabinet Laurent & Charras

(56) Documents cités:
- EP-A2- 2 215 130
- US-A1- 2015 053 361
- US-B2- 8 703 847
- US-B2- 9 506 200

## Description

La présente invention concerne un additif issu de la réaction entre au moins un composé dialdéhyde et au moins un (co)polymère complexe obtenu par la polymérisation d'un ou plusieurs monomères.

La présente invention concerne également un procédé de préparation dudit additif et ses utilisations dans la fabrication de papier.

Dans l'industrie papetière, et plus précisément dans la fabrication du papier, des fibres cellulosiques ainsi que des charges minérales sont mises en suspension aqueuse avant d'être déposées sur une toile de formation de manière à éliminer l'eau et à former un matelas de fibres humides qui sera pressé et séché pour obtenir une feuille de papier.

La rétention de ces fibres et charges est un paramètre important pour récupérer un maximum de matière sur la toile de formation et limiter leur passage à travers la toile de formation.

Par ailleurs, la capacité d'égouttage du matelas fibreux est également un élément majeur dans les procédés papetiers car une augmentation de la capacité d'égouttage permet d'augmenter la vitesse de la machine à papier, et donc d'améliorer sa productivité. On peut distinguer au laboratoire l'égouttage gravitaire et l'égouttage sous vide, ce dernier proposant une meilleure simulation des caisses aspirantes. Ce paramètre est d'autant plus important que les machines sont rapides.

D'autre part, on recherche également des papiers et cartons qui sont de plus en plus résistants, notamment pour l'industrie de l'emballage ou du tissu. L'augmentation de la résistance mécanique de la feuille de papier, évaluée à l'état sec ou à l'état humide en fonction du segment concerné de l'industrie papetière, permet de proposer une qualité accrue de papier. On peut parler notamment de résistance à l'éclatement, à la compression, à la délamination, à la traction à l'état sec ou à l'état humide.

Le document US 9,546,246 B2 décrit un complexe de polymères hydrosolubles ainsi que son utilisation en tant qu'agent de traitement de charges minérales pour leur mise en œuvre dans la fabrication de papier. Ce complexe permet notamment d'améliorer la rétention des charges minérales au sein du matelas fibreux. L'augmentation du taux de charges dans le papier peut néanmoins avoir un impact néfaste sur la résistance mécanique du papier.

Un autre (co)polymère complexe décrit dans la demande de brevet FR 3 080 853 A1 permet d'améliorer les propriétés de résistance à sec du papier, du carton ou analogues. Ce (co)polymère complexe n'apporte aucun bénéfice en termes de capacité d'égouttage.

Les polyacrylamides hydrosolubles fonctionnalisés par un dialdéhyde sont largement utilisés dans les procédés de fabrication du papier afin d'augmenter notamment la résistance à l'état sec et à l'état humide de ces papiers. Ces polyacrylamides hydrosolubles peuvent être fabriqués à partir de polymères cationiques, amphotères ou anioniques.

Le document US 2011/0056640 décrit un procédé de fabrication de papier mettant en œuvre un composé issu de la réaction entre un dialdéhyde et un copolymère acrylamide/chlorure de diallyldiméthyl ammonium. Ce copolymère n'améliore que le drainage.

Des polymères cationiques ou amphotères issus de la réaction entre au moins un dialdéhyde et au moins un (co)polymère base préalablement modifié avec au moins un composé polyfonctionnel de type polyéthylèneimine sont décrits dans le document US 9,506,200 B2. Ces polymères permettent d'améliorer la résistance à sec du papier ainsi que l'égouttage gravitaire du fourni papetier. L'égouttage sous vide n'est pas mentionné dans le cadre de ce brevet, cela représente néanmoins aujourd'hui une caractéristique importante relative aux machines à papier fonctionnant à haute vitesse.

Le document US 8,703,847 B2 décrit des polymères glyoxalés, réalisés spécifiquement à une concentration proche d'une concentration qualifiée de critique et présentant une viscosité inférieure à 30 cps. Ces polymères développent des performances de résistance à sec dans. Les performances d'égouttage ne sont pas mentionnées.

Le document US 9,644,320 B2 décrit des polymères glyoxalés de faible concentration, haut poids moléculaire et haute cationicité utilisé en tant qu'agent de résistance à sec et humide soit dans la pâte, soit en surface de la feuille humide ou sèche.

Un procédé d'obtention de polymères anioniques hydrosolubles, produits de la réaction entre un dialdéhyde et un polymère anionique base comprenant au moins 5%mol d'acide 2-acrylamido-2-méthylpropane sulfonique et/ou un de ses sels, sont décrits dans la demande de brevet FR 3 079 516 A1. Il est également décrit un procédé papetier utilisant ces polymères anioniques hydrosolubles permettant d'avoir des performances améliorées de résistance à l'état sec ainsi qu'à l'état humide. Les performances d'égouttage ne sont pas mentionnées.

D'autres documents pertinents sont EP-B-2215130 (WO-A-2009/059725) et US-A-2015/053361.

Le problème que se propose de résoudre l'invention est de fournir un nouvel additif permettant d'améliorer à la fois les propriétés d'égouttage sous vide et les propriétés de résistance à l'état sec et à l'état humide, sans effet secondaire négatif.

Dans la suite de la description et dans les revendications, on désigne :
- par « (co)polymère base », le (co)polymère avant la formation des fonctions amines primaires,
- par « (co)polymère hôte », le (co)polymère après la formation des fonctions amines primaires et avant la formation du (co)polymère complexe,
- par « (co)polymère complexe », le produit issu de la polymérisation de monomères hydrosolubles en présence du (co)polymère hôte,
- par « additif », le produit issu de la réaction entre au moins un composé dialdéhyde et au moins un (co)polymère complexe. Par additif on désigne aussi, un agent à la fois de résistance à sec, de rétention, d'égouttage et de runnabilité.

Le terme « hydrosoluble » désigne un composé (notamment un (co)polymère complexe ou un (co)polymère ou un monomère) formant une solution aqueuse sans particules insolubles lorsqu'il est ajouté sous agitation pendant 4 heures à 25°C à une concentration de 20 g.L⁻¹ dans l'eau.

### Description de l'invention

La présente invention concerne un additif issu de la réaction entre au moins un composé dialdéhyde et au moins un (co)polymère complexe comprenant un polymère hôte et un ou plusieurs types de monomères hydrosolubles polymérisés en présence dudit polymère hôte. Plus précisément, l'objet de la présente invention concerne un additif issu de la réaction entre au moins un composé dialdéhyde et au moins un (co)polymère complexe obtenu par polymérisation de monomères hydrosolubles en présence d'au moins un (co)polymère hôte comprenant des fonctions vinylamine (-CH₂-CH(NH₂)-).

Par polymère, on entend un homopolymère ou un copolymère issu de la polymérisation de monomères respectivement identiques ou distincts. Un (co)polymère désigne également un homopolymère ou un copolymère issu de la polymérisation de monomères respectivement identiques ou distincts.

### Polymère hôte

Le polymère hôte comprend préférentiellement des fonctions amines primaires (vinylamine) et des fonctions amides. Il est avantageusement hydrosoluble.

Le polymère hôte comprenant des fonctions vinylamines peut être issu de différents procédés connus de l'homme du métier. Il peut notamment s'agir :
- d'un polymère issu de la dégradation d'Hofmann sur un (co)polymère base d'acrylamide, ou
- d'un polymère issu de l'hydrolyse totale ou partielle d'un (co)polymère base de N-vinylformamide.

### Les polyvinylamines issues de la dégradation d'Hofmann sur un (co)polymère base

La dégradation d'Hofmann est une réaction découverte par Hofmann à la fin du dix-neuvième siècle, qui permet de convertir un amide (voire un acrylonitrile) en amine primaire par élimination de dioxyde de carbone. Le mécanisme réactionnel est détaillé ci-dessous.

En présence d'une base (soude), un proton est arraché à l'amide.

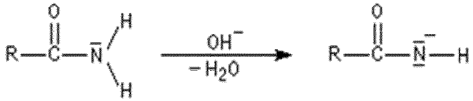

L'ion amidate formé réagit alors avec le chlore actif (Cl₂) de l'hypochlorite (e.g. : NaClO qui est en équilibre : 2 NaOH + Cl₂ ↔ NaClO + NaCl + H₂O) pour donner un N-chloramide. La base (NaOH) arrache un proton du chloramide pour former un anion. L'anion perd un ion chlorure pour former un nitrène qui subit une transposition en isocyanate.

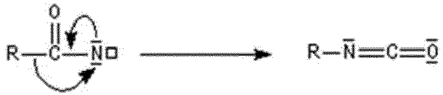

Par réaction entre l'ion hydroxyde et l'isocyanate, un carbamate est formé.

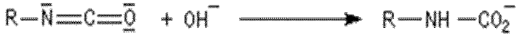

Après décarboxylation (élimination de CO₂) à partir du carbamate, on obtient une amine primaire :

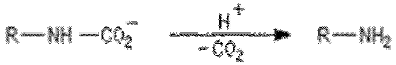

Pour la conversion de tout ou partie des fonctions amide d'un polymère en fonctions amines, deux facteurs principaux interviennent (exprimés en rapports molaires). Il s'agit de :
- Alpha = (hypohalogénure d'alcalin et/ou alcalino terreux / amide),
- Beta = (hydroxyde d'alcalin et/ou alcalino terreux / hypohalogénure d'alcalin et/ou alcalino terreux).

Selon un mode préférentiel, le polymère comprenant des fonctions vinylamine (-CH₂-CH(NH₂)-) est issu de la dégradation d'Hofmann effectuée sur un (co)polymère base comprenant un monomère non ionique choisi dans le groupe comprenant l'acrylamide ou un de ses dérivés.

Parmi les dérivés d'acrylamide, on peut citer le méthacrylamide, le N-isopropylacrylamide, le N-méthyl méthacrylamide, le N,N-diméthylacrylamide, la N-vinylformamide, la N-vinylpyrrolidone, ou encore l'acrylonitrile. Le monomère préféré est l'acrylamide.

Selon l'invention, la proportion en monomère acrylamide ou dérivés dans le (co)polymère base est avantageusement comprise entre 30 %mol et 100 %mol, de préférence entre 50 %mol et 95 %mol, et encore plus préférentiellement entre 60 %mol et 90 %mol, par rapport au nombre total de monomères dans le (co)polymère base.

Le (co)polymère base peut également contenir en outre des monomères cationiques et/ou anioniques.

Le ou les monomères cationiques pouvant être utilisés dans le cadre de l'invention peuvent être choisis, notamment parmi les sels d'ammonium quaternaire des monomères du type vinylique, notamment acrylamide, acrylique, allylique ou maléique. On peut citer, en particulier et de façon non limitative, l'acrylate de diméthylaminoéthyle (ADAME) quaternisé, le méthacrylate de diméthylaminoéthyle (MADAME) quaternisé, le chlorure de diméthyldiallylammonium (DADMAC), le chlorure d'acrylamido propyltriméthyl ammonium (APTAC), et le chlorure de méthacrylamido propyltriméthyl ammonium (MAPTAC). Un monomère cationique préféré est le DADMAC. L'anion chlorure peut éventuellement être substitué par un autre halogénure, par exemple un bromure ou par un autre type d'anion.

La quaternisation des monomères, comme l'ADAME ou MADAME, peut notamment être réalisée au moyen d'un halogénure d'alkyle ou un halogénure d'aryle, par exemple un halogénure de méthyle, avantageusement le chlorure de méthyle ou le chlorure de benzyle.

Selon l'invention, la proportion en monomère cationique dans le (co)polymère base, est avantageusement comprise entre 0 %mol et 70 %mol, de préférence entre 5 %mol et 50 %mol, et encore plus préférentiellement entre 10 %mol et 40 %mol, par rapport au nombre total de monomères dans le (co)polymère base.

Le ou les monomères anioniques pouvant être utilisés dans le cadre de l'invention peuvent être choisis dans un large groupe. Ces monomères peuvent présenter des fonctionnalités vinyliques, notamment acryliques, maléiques, fumariques, allyliques et contenir un groupe carboxylate, phosphonate, phosphate, sulfate, sulfonate, ou un autre groupe à charge anionique. Le monomère peut être acide ou bien sous forme de sel ou de métal alcalino terreux, de métal alcalin ou d'ammonium correspondant d'un tel monomère. Des exemples de monomères convenables comprennent l'acide acrylique, l'acide méthacrylique, l'acide itaconique, l'acide crotonique, l'acide maléique, l'acide fumarique et les monomères de type acide fort présentant par exemple une fonction de type acide sulfonique ou acide phosphonique tels que l'acide 2-acrylamido 2-methylpropane sulfonique, l'acide vinylsulfonique, l'acide vinylphosphonique, l'acide allylsulfonique, l'acide allylphosphonique, l'acide styrène sulfonique, et les sels de ces monomères solubles dans l'eau d'un métal alcalin, d'un métal alcalino terreux, et d'ammonium. Un monomère préféré est l'acide acrylique.

Selon l'invention la proportion en monomère anionique dans le (co)polymère base est avantageusement comprise entre 0 %mol et 99 %mol, de préférence entre 2 %mol et 50 %mol, et encore plus préférentiellement entre 5 %mol et 30 %mol, par rapport au nombre total de monomères dans le (co)polymère base.

Il est important de noter que, en association avec ces monomères, il est également possible d'utiliser des monomères insolubles dans l'eau tels que les monomères vinyliques, notamment acryliques ou allyliques, comportant un groupement hydrophobe. Lors de leur utilisation, ces monomères seront employés dans des quantités très faibles, avantageusement inférieures à 20 %mol, de préférence inférieures à 10 %mol, et ils seront choisis préférentiellement dans le groupe comprenant les dérivés de l'acrylamide comme les N-alkylacrylamide (avantageusement alkyle en C4 à C25) par exemple le N-tert-butylacrylamide, l'octylacrylamide ainsi que les N,N-dialkylacrylamides (avantageusement alkyles, identiques ou non, en C4 à C25) comme le N,N-dihexylacrylamide, les dérivés d'acide acrylique comme les acrylates et méthacrylates d'alkyles éthoxylés ou non (avantageusement alkyles en C4 à C25).

Selon l'invention, le facteur alpha du (co)polymère hôte issu de la dégradation d'Hofmann est avantageusement compris entre 0,01 et 1, de préférence entre 0,05 et 0,9, et encore plus préférentiellement entre 0,1 et 0,8.

Selon un autre mode de l'invention, il est possible d'utiliser des polyvinylamines obtenues par dégradation d'Hofmann effectuée sur un polymère comprenant de l'acrylamide ou ses dérivés, et au moins un composé polyfonctionnel contenant au moins 3 hétéroatomes parmi N, O, S, P présentant chacun au moins un hydrogène mobile. L'incorporation du composé polyfonctionnel est effectuée avant ou pendant la polymérisation des monomères constitutifs du (co)polymère base.

De manière préférentielle, le composé polyfonctionnel est choisi dans le groupe comprenant la polyéthylèneimine, la polyamine, et la polyallylamine.

### Les polyvinylamines issues de l'hydrolyse totale ou partielle d'un (co)polymère base de N-vinylformamide

Dans une première étape, un (co)polymère base de N-vinylformamide (NVF) est obtenu, la poly(N-Vinylformamide) présentant le motif suivant :

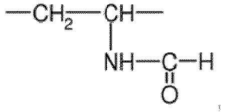

Par la suite, ce motif est converti, par hydrolyse, en amine primaire pour former une poly(vinylamine) :

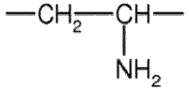

L'hydrolyse peut être menée par action d'acide (hydrolyse acide) ou de base (hydrolyse basique).

En fonction de la quantité d'acide ou de base ajoutée, le (co)polymère base de N-vinylformamide est partiellement ou totalement converti en poly(vinylamine).

De manière avantageuse, le degré d'hydrolyse est compris entre 1 et 100%, plus avantageusement encore entre 30 et 90%. En d'autres termes, 30 à 90 groupements NVF sont convertis en groupements amine pour 100 groupements NVF de départ.

Préférentiellement, le (co)polymère base de N-vinylformamide comprend au moins un monomère non ionique et/ou au moins un monomère cationique et/ou au moins un monomère anionique. Les monomères pouvant être utilisés dans le cadre de l'invention peuvent être choisis parmi les listes ci-dessus mentionnées, les monomères non ioniques correspondant avantageusement à l'acrylamide, le méthacrylamide, le N-isopropylacrylamide, le N-méthyl méthacrylamide, le N,N-diméthylacrylamide, la N-vinylformamide, la N-vinylpyrrolidone, et l'acrylonitrile.

Outre la fonction vinylamine, selon un mode de réalisation préférentiel, le (co)polymère hôte comprend au moins un monomère non ionique et au moins un monomère cationique. Préférentiellement, le polymère comprend de l'acrylamide et du DADMAC.

Selon une caractéristique préférée de l'invention et quel que soit le mode de réalisation (Hofmann, hydrolyse du poly(NVF)...), le (co)polymère hôte peut être linéaire ou avoir une structure ramifiée, star (en forme d'étoile), comb (en forme de peigne).

La structure du (co)polymère complexe est obtenue de préférence durant (ou éventuellement après) la polymérisation des monomères constituant le polymère hôte, en présence d'un agent ramifiant polyfonctionnel et éventuellement d'un agent de transfert.

L'agent ramifiant peut être choisi par exemple, parmi le méthylène bisacrylamide (MBA), l'éthylène glycol di-acrylate, le polyéthylène glycol diméthacrylate, le diacrylamide, le cyanométhylacrylate, le vinyloxyéthylacrylate, le vinyloxyméthacrylate, la triallylamine, les composés de type glycidyléther comme l'éthylèneglycol di glycidyléther, des époxy, le pentaeryhtritol, les polyvinylalcools, des xanthates ou encore des réticulants sous forme de cœurs étoilés.

L'agent de transfert peut être choisi parmi les polyperoxydes, polyazoïques et les polyagents de transfert tels que les (co)polymères polymercaptants, et les polyols comme par exemple l'alcool isopropylique, hypophosphite de sodium, mercaptoéthanol, méthallylsulfonate de sodium.

En pratique, l'agent ramifiant est introduit avantageusement à raison de cinq à cinquante milles (5 à 50000) parties par million en poids par rapport à la matière active (poids des monomères constituant le (co)polymère hôte), de préférence 5 à 10000 ppm, avantageusement de 5 à 5000 ppm. Avantageusement, l'agent de structure est le méthylène bis acrylamide (MBA).

Selon l'invention le (co)polymère hôte a un poids moléculaire d'au moins 10000 g/mol, de préférence d'au moins 50000 g/mol, et encore plus préférentiellement d'au moins 100000 g/mol. Son poids moléculaire est avantageusement inférieur ou égal à 10 000 000 g/mol, préférentiellement inférieur à 5 000 000 g/mol.

### Le (co)polymère complexe

Le ou les monomères hydrosolubles mis en œuvre lors de la préparation du (co)polymère complexe peuvent notamment être au moins un monomère non ionique et/ou au moins un monomère anionique et/ou au moins un monomère cationique. Le (co)polymère complexe est avantageusement hydrosoluble.

Les différents monomères mis en œuvre peuvent être choisis parmi les listes respectives citées précédemment dans la description du (co)polymère hôte.

Selon un mode particulier de l'invention, la polymérisation des monomères hydrosolubles est mise en œuvre en présence d'au moins un agent de transfert non polymérique et en l'absence d'agent ramifiant ou réticulant de type polyfonctionnel éthylénique. Préférentiellement, l'agent de transfert a un poids moléculaire avantageusement inférieur à 200 g/mol. Son poids moléculaire est avantageusement supérieur ou égal à 2 g/mol.

Par « agent ramifiant ou réticulant de type polyfonctionnel éthylénique », on désigne les agents comportant un groupement polyvinylique, par exemple polyallylique, notamment bifonctionnalisé, trifonctionnalisé ou tetrafonctionnalisé.

Au moins un agent de transfert non polymérique mis en œuvre lors de la polymérisation du ou des monomères hydrosolubles est avantageusement choisi dans le groupe comprenant l'alcool isopropylique, l'hypophosphite de sodium, le (méth)allyl sulfonate de sodium et le mercaptoéthanol.

La quantité d'agent de transfert introduite est avantageusement comprise entre 1 et 15000 ppm, préférentiellement entre 10 et 10000 ppm, plus préférentiellement entre 100 et 5000 ppm en poids par rapport au poids des monomères hydrosolubles mis en œuvre.

De manière générale, la préparation du (co)polymère complexe de l'invention ne nécessite pas de développement de procédé de polymérisation particulier. En effet, ce (co)polymère complexe peut être obtenu selon toutes les techniques de polymérisation bien connues par l'homme du métier. Il peut notamment s'agir de polymérisation en solution ; polymérisation en gel ; polymérisation par précipitation ; polymérisation en émulsion (aqueuse ou inverse) ; polymérisation en suspension ; ou de polymérisation micellaire.

La polymérisation est généralement une polymérisation à radicaux libres comme par exemple au moyen d'initiateurs UV, azoïques, redox ou thermiques ainsi que les techniques de polymérisation radicalaire contrôlée (CRP) ou les techniques de polymérisation sur matrice.

### L'additif de polymères

Comme indiqué précédemment, l'additif est le produit issu de la réaction entre au moins un composé dialdéhyde et au moins un (co)polymère complexe. L'additif est avantageusement hydrosoluble.

Avantageusement, le composé dialdéhyde pourra être choisi dans le groupe comprenant le glyoxal, le dialdéhyde malonique, le dialdéhyde succinique, le glutaraldéhyde, le dialdéhyde adipique, le dialdéhyde 2-hydroxyadipique, le dialdéhyde pimélique, le dialdéhyde subérique, le dialdéhyde azélaïque, le dialdéhyde sébacique, le dialdéhyde maléique, le dialdéhyde fumarique, le phtalaldéhyde, l'isophthalaldéhyde, le teréphthalaldéhyde et le 1,4-diformylcyclohexane et leurs combinaisons.

De manière préférentielle la quantité présente de dialdéhyde durant la réaction est comprise entre 5% et 50%, préférentiellement entre 10% et 40% en poids par rapport au (co)polymère complexe.

Par « glyoxalation », on désigne la réaction entre le (co)polymère complexe et le composé dialdéhyde, quelle que soit leur nature, le dialdéhyde étant avantageusement le glyoxal.

La glyoxalation ne nécessite pas de méthode particulière. Les principales techniques de glyoxalation connues de l'homme du métier peuvent être utilisées. Par exemple, le pH pourra être ajusté après addition de du dialdéhyde, avantageusement avec une solution de soude. Il est aussi possible de conduire la réaction à pH contrôlé par addition continue d'une base, avantageusement de la soude, mais aussi d'additionner du dialdéhyde en plusieurs fractions. L'avancement de la réaction pourra aussi être suivi par une mesure de viscosité, de turbidité... etc.

Selon un autre aspect, l'invention concerne un procédé de préparation d'un additif à base de polymères comprenant les étapes suivantes :
a/ Préparation d'au moins un (co)polymère base composé d'au moins un monomère non ionique,
b/ Préparation d'au moins un (co)polymère hôte obtenu par dégradation dite d'Hofmann effectuée sur au moins un (co)polymère base obtenu en étape a/,
c/ Préparation d'au moins un (co)polymère complexe par polymérisation d'au moins un monomère hydrosoluble en présence d'au moins un (co)polymère hôte obtenu en étape b/,
d/ Préparation d'un additif issu de la réaction entre au moins un composé dialdéhyde et au moins un (co)polymère complexe obtenu en étape c/.

Selon un autre aspect, l'invention concerne un procédé de préparation d'un additif à base de polymères comprenant les étapes suivantes :
a/ Préparation d'au moins un (co)polymère base de N-vinylformamide,
b/ Préparation d'au moins un (co)polymère hôte obtenu par l'hydrolyse, au moins partielle, du (co)polymère de N vinylformamide obtenu en étape a/,
c/ Préparation d'au moins un (co)polymère complexe par polymérisation d'au moins un monomère hydrosoluble en présence d'au moins un (co)polymère hôte obtenu en étape b/,
d/ Préparation d'un additif issu de la réaction entre au moins un composé dialdéhyde et au moins un (co)polymère complexe obtenu en étape c/.

Par « (co)polymère composé d'au moins un monomère », on désigne un polymère obtenu à partir de plusieurs molécules d'au moins un monomère. Ainsi, un polymère d'un monomère correspond à un polymère obtenu à partir de plusieurs unités de répétition de molécules d'un monomère.

L'additif obtenu selon l'invention peut être utilisé avec succès pour la fabrication de tout type de papiers, cartons ou analogues nécessitant l'utilisation d'un polymère comme agent de résistance à sec, de rétention, d'égouttage et de runnabilité. Il peut notamment s'agir de papiers et cartons d'emballage ; de papiers supports de couchage ; de papiers sanitaires ; et de papiers domestiques,

Par runnabilité, on désigne l'optimisation du fonctionnement de la machine à papier en augmentant la productivité par un meilleur égouttage sur la table, une meilleure siccité à la section de presse, une diminution des casses par une plus grande propreté des circuits et une diminution des dépôts.

L'additif de l'invention permet, en particulier, un gain significatif en productivité des machines à papier sur lesquelles cet additif serait utilisé. Il permet par ailleurs d'obtenir de meilleures propriétés d'égouttage sous vide et des propriétés de résistance à l'état sec et à l'état humide et ceci, sans effet secondaire négatif.

Selon l'invention, l'additif est ajouté dans le procédé, avant ou après formation de la feuille. Ainsi, la mise en contact de la matière cellulosique avec l'additif peut être effectuée de différentes manières. L'additif peut être utilisé sous forme de solution aqueuse diluée ou non diluée. L'additif peut être ajouté à la matière cellulosique. Il peut être appliqué par une technique d'imprégnation, ou peut être directement ajouté dans la suspension fibreuse à tout endroit du procédé de fabrication du papier où habituellement des agents de résistance à sec sont introduits.

Il peut être introduit dans la pâte épaisse (thick stock) ou dans la pâte diluée (thin stock). Il peut être ajouté au niveau de la pompe de mélange (fan pump) ou de la caisse de tête. Préférentiellement, l'additif est introduit avant la caisse de tête.

Il peut aussi être appliqué au niveau de la table de formation, par exemple par spray, ou à l'aide de la coucheuse.

L'incorporation ou l'application de l'additif peut se faire avec les moyens conventionnels connus de l'homme du métier.

Préférentiellement, l'additif est injecté industriellement dans la suspension fibreuse, c'est-à-dire avant sa dilution par les eaux blanches (pâte épaisse). La concentration de la pâte est avantageusement de l'ordre de 3% à 5% en poids.

Le procédé peut être utilisé avec des pâtes de fibres vierges (Kraft, Bisulfite..),des pâtes de fibres recyclées, des pâtes désencrées, des pâtes mécaniques ou des pâtes thermomécaniques.

L'additif peut, de manière préférée, être préparé à proximité de la machine à papier.

L'invention et les avantages qui en découlent ressortent bien des exemples de réalisation suivants.

### Exemples

Toutes les viscosités sont mesurées avec un viscosimètre de type Brookfield, équipé avec un module LV1. Les mesures sont réalisées à une vitesse de rotation de 60rpm.

### Exemple 1 (selon l'invention) :

### Synthèse du copolymère complexe 1

Dans un réacteur de 1 litre équipé d'un agitateur mécanique, d'un thermomètre, d'un réfrigérant et d'une canne plongeante d'azote gazeux, on introduit 38,1g de polymère hôte (produit commercial Floret HF31 (SNF SA), matière active=10,5% en poids dans l'eau, matière sèche=21%, soit 4 g de polymère hôte). On ajoute 559g d'eau, 254,9g d'acrylamide 50% (solution à 50% en poids dans l'eau) et 145,4g d'ATBS 50% (solution à 50% en poids dans l'eau), ainsi que 0,67g d'agent de transfert de chaine (hypophosphite de sodium) (ATBS = acide 2-acrylamido 2-methylpropane sulfonique). Le pH du milieu réactionnel est ajusté à 4,1 à l'aide d'acide sulfurique. La température est ajustée à 21°C et les catalyseurs sont alors injectés dans le milieu réactionnel, soit 0,31g de persulfate de sodium, 0,41g de métabisulfite de sodium et 0,01g de sel de Mohr. Grâce à l'exothermie de réaction, la température du milieu réactionnel augmente jusqu'à la température de 62,1°C. Après 45 minutes de vieillissement, 2,5g de bisulfite de sodium (solution à 40% en poids dans l'eau) sont additionnés pour faire réagir les éventuels monomères résiduels. Un nouveau vieillissement de 45 minutes est appliqué avant refroidissement. La solution de polymère complexe 1 obtenue présente un pH de 4,1, un extrait sec de 20,2% et une viscosité de 1200 cps.

Dans les exemples 1 à 4, le produit Floret HF31 correspond au copolymère issu de la dégradation d'Hofmann d'un copolymère DADMAC/AM (30/70 % en mole) avec un facteur alpha=0,7 (AM = acrylamide).

### Synthèse de l'additif 1

Dans un réacteur de 1 litre équipé d'un agitateur mécanique, on introduit 241,4g de copolymère complexe 1 et 539,3g d'eau. Le réacteur est muni d'une sonde de pH. Après 10 minutes d'agitation, le pH est ajusté à 11,1 avec une solution de soude à 10% en poids dans l'eau. La température est maintenue entre 20 et 22°C. 19,3g de glyoxal à 40% en poids dans l'eau sont additionnés. Le contrôle du pH et le suivi de la viscosité permettent d'obtenir un produit à 65 cps. On stoppe la réaction par un abaissement du pH à moins de 3,5 par addition de H₂SO₄ à 92% dans l'eau pour obtenir l'additif 1.

### Exemple 2 (selon l'invention) :

### Synthèse du copolymère complexe 2

Dans un réacteur de 1 litre équipé d'un agitateur mécanique, d'un thermomètre, d'un réfrigérant et d'une canne plongeante d'azote gazeux, on introduit 38,1g de polymère hôte (produit commercial Floret HF31 (SNF SA), matière active=10,5% en poids dans l'eau, matière sèche=21%). On ajoute 481,3g d'eau, 33,4g de chlorure de diméthyl diallyl ammonium (DADMAC 64% en poids dans l'eau). Le pH est ajusté à 2,5 avec du H₂SO₄. Le milieu est chauffé et maintenu à une température comprise entre 79 et 81°C grâce à un bain-marie. Grâce à deux coulées continues, on incorpore 357,2g d'acrylamide 50% (solution à 50% en poids) et 0,67g d'agent de transfert de chaine (hypophosphite de sodium) en coulée continue pendant 90 minutes et une solution de persulfate de sodium pendant 90 minutes. Après 30 minutes de vieillissement, 0,26g de bisulfite de sodium (solution à 40% en poids dans l'eau) sont additionnés pour faire réagir les éventuels monomères résiduels. Un nouveau vieillissement de 60 minutes est appliqué avant refroidissement. La solution de copolymère complexe 2 obtenue présente un pH de 5,0, un extrait sec de 19,6% et une viscosité de 900cps.

### Synthèse de l'additif 2a

Dans un réacteur de 1 litre équipé d'un agitateur mécanique, on introduit 160g de copolymère complexe 2 et 620g d'eau. Le réacteur est muni d'une sonde de pH. Après 10 minutes d'agitation, le pH est ajusté à 10,3 avec une solution de soude à 10% en poids dans l'eau. La température est maintenue entre 20 et 22°C. 20,0g de glyoxal à 40% en poids dans l'eau sont additionnés. Le contrôle du pH et le suivi de la viscosité permettent d'obtenir un produit à 49 cps. On stoppe la réaction par un abaissement du pH à moins de 3,5 par addition de H₂SO₄ à 92% dans l'eau pour obtenir l'additif 2a.

### Synthèse de l'additif 2b

Dans un réacteur de 1 litre équipé d'un agitateur mécanique, on introduit 69,6g de copolymère complexe 2 et 725,2g d'eau. Le réacteur est muni d'une sonde de pH. Après 10 minutes d'agitation, le pH est ajusté à 10,38 avec une solution de soude à 10% en poids dans l'eau. La température est maintenue entre 20 et 22°C. 5,22g de glyoxal à 40% en poids dans l'eau sont additionnés. Le contrôle du pH et le suivi de la viscosité permettent d'obtenir un produit à 38 cps. On stoppe la réaction par un abaissement du pH à moins de 3,5 par addition de H₂SO₄ à 92% dans l'eau pour obtenir l'additif 2b.

### Exemple 3 (selon l'invention) :

### Synthèse du copolymère complexe 3

Dans un réacteur de 1 litre équipé d'un agitateur mécanique, d'un thermomètre, d'un réfrigérant et d'une canne plongeante d'azote gazeux, on introduit 38,1g de polymère hôte (produit commercial Floret HF31 (SNF SA), matière active=10,5% en poids dans l'eau, matière sèche=21%). On ajoute 565,9g d'eau, 113,3g de chlorure de diméthyl diallyl ammonium (DADMAC 64% en poids dans l'eau). Le pH est ajusté à 2,5 avec du H₂SO₄. Le milieu est chauffé et maintenu à une température comprise entre 79 et 81°C grâce à un bain-marie. Grâce à deux coulées continues, on incorpore 255g d'acrylamide 50% (solution à 50% en poids dans l'eau) et 0,07g d'agent de transfert de chaine (hypophosphite de sodium) en coulée continue pendant 90 minutes et une solution de persulfate de sodium pendant 90 minutes. Après 30 minutes de vieillissement, 0,26g de bisulfite de sodium (solution à 40% en poids dans l'eau) sont additionnés pour faire réagir les éventuels monomères résiduels. Un nouveau vieillissement de 60 minutes est appliqué avant refroidissement. La solution de copolymère complexe 3 obtenue présente un pH de 5,0, un extrait sec de 19,7% et une viscosité de 2000cps.

### Synthèse de l'additif 3a

Dans un réacteur de 1 litre équipé d'un agitateur mécanique, on introduit 256,8g de copolymère complexe 3 et 521,6g d'eau. Le réacteur est muni d'une sonde de pH. Après 10 minutes d'agitation, le pH est ajusté à 10,6 avec une solution de soude à 10% en poids dans l'eau. La température est maintenue entre 20 et 22°C. 21,6g de glyoxal à 40% en poids dans l'eau sont additionnés. Le contrôle du pH et le suivi de la viscosité permettent d'obtenir un produit à 97 cps. On stoppe la réaction par un abaissement du pH à moins de 3,5 par addition de H₂SO₄ à 92% dans l'eau pour obtenir l'additif 3a.

### Synthèse de l'additif 3b

Dans un réacteur de 1 litre équipé d'un agitateur mécanique, on introduit 69,6g de copolymère complexe 3 et 725,2g d'eau. Le réacteur est muni d'une sonde de pH. Après 10 minutes d'agitation, le pH est ajusté à 10,4 avec une solution de soude à 10% en poids dans l'eau. La température est maintenue entre 20 et 22°C. 5,22g de glyoxal à 40% en poids dans l'eau sont additionnés. Le contrôle du pH et le suivi de la viscosité permettent d'obtenir un produit à 18 cps. On stoppe la réaction par un abaissement du pH à moins de 3,5 par addition de H₂SO₄ à 92% dans l'eau pour obtenir l'additif 3b.

### Exemple 4 (selon l'invention) :

### Synthèse du copolymère complexe 4

Dans un réacteur de 1 litre équipé d'un agitateur mécanique, d'un thermomètre, d'un réfrigérant et d'une canne plongeante d'azote gazeux, on introduit 38,1g de polymère hôte (produit commercial Floret HF31 (SNF SA), matière active=10,5% en poids dans l'eau, matière sèche=21%). On ajoute 584,5g d'eau, 89,5g de chlorure de diméthyl diallyl ammonium (DADMAC 64% en poids dans l'eau). Le pH est ajusté à 2,5 avec du H₂SO₄. Le milieu est chauffé et maintenu à une température comprise entre 79 et 81°C grâce à un bain-marie. Grâce à deux coulées continues, on incorpore 285,4g d'acrylamide 50% (solution à 50% en poids dans l'eau) et 0,07g d'agent de transfert de chaine (hypophosphite de sodium) en coulée continue pendant 90 minutes et une solution de persulfate de sodium pendant 90 minutes. Après 30 minutes de vieillissement, 0,26g de bisulfite de sodium (solution à 40% en poids dans l'eau) sont additionnés pour faire réagir les éventuels monomères résiduels. Un nouveau vieillissement de 60 minutes est appliqué avant refroidissement. La solution de copolymère complexe 4 obtenue présente un pH de 4,7, un extrait sec de 20,6% et une viscosité de 3500cps.

### Synthèse de l'additif 4

Dans un réacteur de 1 litre équipé d'un agitateur mécanique, on introduit 69,6g de copolymère complexe 4 et 725,2g d'eau. Le réacteur est muni d'une sonde de pH. Après 10 minutes d'agitation, le pH est ajusté à 10,4 avec une solution de soude à 10% en poids dans l'eau. La température est maintenue entre 20 et 22°C. 5,22g de glyoxal à 40% en poids dans l'eau sont additionnés.

Le contrôle du pH et le suivi de la viscosité permettent d'obtenir un produit à 54 cps. On stoppe la réaction par un abaissement du pH à moins de 3,5 par addition de H₂SO₄ à 92% dans l'eau pour obtenir l'additif 4.

### Exemple 5 (selon l'invention) :

### Synthèse du copolymère complexe 5

Le protocole de synthèse du copolymère complexe 4 est répété mais la quantité de polymère hôte introduite est de 95,2g.

La solution de copolymère complexe 5 obtenue présente un pH de 4,8, un extrait sec de 20,7% et une viscosité de 2100cps.

### Synthèse de l'additif 5

Le protocole de synthèse de l'additif 4 est répété en remplaçant le copolymère complexe 4 par le copolymère complexe 5.

Le contrôle du pH et le suivi de la viscosité permettent d'obtenir un produit à 35 cps. On stoppe la réaction par un abaissement du pH à moins de 3,5 par addition de H₂SO₄ à 92% dans l'eau pour obtenir l'additif 5.

### Exemple 6 (selon l'invention) :

### Synthèse du copolymère complexe 6

Le protocole de Synthèse du copolymère complexe 4 est répété mais la quantité de polymère hôte introduite est de 190,5g.

La solution de copolymère complexe 6 obtenue présente un pH de 5,0, un extrait sec de 20,5% et une viscosité de 3500cps.

### Synthèse de l'additif 6

Le protocole de synthèse de l'additif 4 est répété en remplaçant le copolymère complexe 4 par le copolymère complexe 6.

Le contrôle du pH et le suivi de la viscosité permettent d'obtenir un produit à 38 cps. On stoppe la réaction par un abaissement du pH à moins de 3,5 par addition de H₂SO₄ à 92% dans l'eau pour obtenir l'additif 6.

### Exemple 7 (contre-exemple) :

### Synthèse du copolymère 1

Dans un réacteur de 1 litre équipé d'un agitateur mécanique, d'un thermomètre, d'un réfrigérant et d'une canne plongeante d'azote gazeux, on introduit 597,1g d'eau, 254,9g d'acrylamide 50% (solution à 50% en poids dans l'eau) et 145,4g d'ATBS 50% (solution à 50% en poids dans l'eau), ainsi que 0,67g d'agent de transfert de chaine (hypophosphite de sodium). Le pH du milieu réactionnel est ajusté à 4,1 à l'aide d'acide sulfurique. La température est ajustée à 21°C et les catalyseurs sont alors injectés dans le milieu réactionnel, soit 0,31g de persulfate de sodium, 0,41g de métabisulfite de sodium et 0,01g de sel de Mohr. Grâce à l'exothermie de réaction, la température du milieu réactionnel augmente jusqu'à la température de 62,2°C. Après 45 minutes de vieillissement, 2,5g de bisulfite de sodium (solution à 40% en poids dans l'eau) sont additionnés pour faire réagir les éventuels monomères résiduels. Un nouveau vieillissement de 45 minutes est appliqué avant refroidissement. La solution de copolymère 1 obtenue présente un pH de 4,1, un extrait sec de 20,1% et une viscosité de 700 cps.

### Synthèse du copolymère glyoxalé 1

Dans un réacteur de 1 litre équipé d'un agitateur mécanique, on introduit 241,4g de copolymère 1 et 539,3g d'eau. Le réacteur est muni d'une sonde de pH. Après 10 minutes d'agitation, le pH est ajusté à 11,12 avec une solution de soude à 10% en poids dans l'eau. La température est maintenue entre 20 et 22°C. 19,3g de glyoxal à 40% en poids dans l'eau sont additionnés. Le contrôle du pH et le suivi de la viscosité permettent d'obtenir un produit à 52,5 cps. On stoppe la réaction par un abaissement du pH à moins de 3,5 par addition de H₂SO₄ à 92% dans l'eau pour obtenir le copolymère glyoxalé 1. Le copolymère glyoxalé 1 correspond à l'art antérieur FR 3 079 516 A1.

### Exemple 8 (contre-exemple) :

### Synthèse du copolymère 2

Dans un réacteur de 1 litre équipé d'un agitateur mécanique, d'un thermomètre, d'un réfrigérant et d'une canne plongeante d'azote gazeux, on introduit 519,4g d'eau, 33,4g de chlorure de diméthyldiallyl ammonium (DADMAC 64% en poids dans l'eau). Le pH est ajusté à 2,5 avec du H₂SO₄. Le milieu est chauffé et maintenu à une température comprise entre 79 et 81 °C grâce à un bain-marie. Grâce à deux coulées continues, on incorpore 357,2g d'acrylamide 50% (solution à 50% en poids dans l'eau) en coulée continue pendant 90 minutes et une solution de persulfate de sodium pendant 90 minutes. 1g d'agent de transfert de chaine (hypophosphite de sodium) est alors ajouté et après 30 minutes de vieillissement, 0,26g de bisulfite de sodium (solution à 40% en poids dans l'eau) sont additionnés pour faire réagir les éventuels monomères résiduels. Un nouveau vieillissement de 60 minutes est appliqué avant refroidissement. La solution de copolymère 2 obtenue présente un pH de 5,0, un extrait sec de 19,5% et une viscosité de 1100cps.

### Synthèse du copolymère glyoxalé 2a

Dans un réacteur de 1 litre équipé d'un agitateur mécanique, on introduit 160g de copolymère 2 et 620g d'eau. Le réacteur est muni d'une sonde de pH. Après 10 minutes d'agitation, le pH est ajusté à 10,2 avec une solution de soude à 10% en poids dans l'eau. La température est maintenue entre 20 et 22°C. 20,0g de glyoxal à 40% en poids dans l'eau sont additionnés. Le contrôle du pH et le suivi de la viscosité permettent d'obtenir un produit à 50 cps. On stoppe la réaction par un abaissement du pH à moins de 3,5 par addition de H₂SO₄ à 92% dans l'eau pour obtenir le copolymère glyoxalé 2a.

### Synthèse du copolymère glyoxalé 2b

Dans un réacteur de 1 litre équipé d'un agitateur mécanique, on introduit 69,6g de copolymère 2 et 725,2g d'eau. Le réacteur est muni d'une sonde de pH. Après 10 minutes d'agitation, le pH est ajusté à 10,38 avec une solution de soude à 10% en poids dans l'eau. La température est maintenue entre 20 et 22°C. 5,22g de glyoxal à 40% en poids dans l'eau sont additionnés. Le contrôle du pH et le suivi de la viscosité permettent d'obtenir un produit à 15 cps. On stoppe la réaction par un abaissement du pH à moins de 3,5 par addition de H₂SO₄ à 92% dans l'eau pour obtenir le copolymère glyoxalé 2b. Le copolymère glyoxalé 2b correspond à l'art antérieur US 8,703,847.

### Réalisation du mélange 2

Dans un réacteur de 1 litre équipé d'un agitateur mécanique, on mélange 38,1g de polymère hôte (produit commercial HF31 (SNF Floerger), matière active=10,5% en poids dans l'eau, matière sèche=21%) et 911g du copolymère 2 synthétisé ci-dessus. On obtient un mélange présentant un pH de 4,5, un extrait sec de 19,1%, une viscosité de 950 cps

### Synthèse du mélange glyoxalé 2b

Dans un réacteur de 1 litre équipé d'un agitateur mécanique, on introduit 69,6g de mélange 2 et 725,2g d'eau. Le réacteur est muni d'une sonde de pH. Après 10 minutes d'agitation, le pH est ajusté à 10,38 avec une solution de soude à 10% en poids dans l'eau. La température est maintenue entre 20 et 22°C. 5,22g de glyoxal à 40% en poids dans l'eau sont additionnés. Le contrôle du pH et le suivi de la viscosité permettent d'obtenir un produit ayant une viscosité de 40 cps. On stoppe la réaction par un abaissement du pH à moins de 3,5 par addition de H₂SO₄ à 92% dans l'eau pour obtenir le mélange glyoxalé 2b. Le mélange glyoxalé 2b correspond à l'art antérieur WO 2009/059725.

### Exemple 9 (contre-exemple) :

### Synthèse du copolymère 3

Dans un réacteur de 1 litre équipé d'un agitateur mécanique, d'un thermomètre, d'un réfrigérant et d'une canne plongeante d'azote gazeux, on introduit 605g d'eau, 113,3g de chlorure de diméthyl diallyl ammonium (DADMAC 64% en poids dans l'eau) et 16g de polyéthylénimine. Le pH est ajusté à 2,5 avec du H₂SO₄. Le milieu est chauffé et maintenu à une température comprise entre 79 et 81°C grâce à un bain-marie. Grâce à deux coulées continues, on incorpore 255g d'acrylamide 50% (solution à 50% en poids dans l'eau), 0,2g de methylenebisacrylamide et 0,08g d'hypophosphite de sodium en coulée continue pendant 90 minutes et une solution de persulfate de sodium pendant 90 minutes. 1g d'agent de transfert de chaine (hypophosphite de sodium) est alors ajouté et après 30 minutes de vieillissement, 0,26g de bisulfite de sodium (solution à 40% en poids dans l'eau) sont additionnés pour faire réagir les éventuels monomères résiduels. Un nouveau vieillissement de 60 minutes est appliqué avant refroidissement. La solution de copolymère 3 obtenue présente un pH de 4,1, un extrait sec de 20,9% et une viscosité de 2050cps.

### Synthèse du copolymère glyoxalé 3a

Dans un réacteur de 1 litre équipé d'un agitateur mécanique, on introduit 260,9g de copolymère 3 et 519,6g d'eau. Le réacteur est muni d'une sonde de pH. Après 10 minutes d'agitation de pH est ajusté à 10,2 avec une solution de soude à 10% en poids dans l'eau. La température est maintenue entre 20 et 22°C. 19,57g de glyoxal à 40% en poids dans l'eau sont additionnés. Le contrôle du pH et le suivi de la viscosité permettent d'obtenir un produit à 95 cps. On stoppe la réaction par un abaissement du pH à moins de 3,5 par addition de H₂SO₄ à 92% dans l'eau pour obtenir le copolymère glyoxalé 3a. Le copolymère glyoxalé 3 correspond à l'art antérieur FR 2 987 375.

### Synthèse du copolymère glyoxalé 3b

Dans un réacteur de 1 litre équipé d'un agitateur mécanique, on introduit 69,6g de copolymère 3 et 725,2g d'eau. Le réacteur est muni d'une sonde de pH. Après 10 minutes d'agitation, le pH est ajusté à 10,5 avec une solution de soude à 10% en poids dans l'eau. La température est maintenue entre 20 et 22°C. 5,22g de glyoxal à 40% en poids dans l'eau sont additionnés. Le contrôle du pH et le suivi de la viscosité permettent d'obtenir un produit à 55 cps. On stoppe la réaction par un abaissement du pH à moins de 3,5 par addition de H₂SO₄ à 92% dans l'eau pour obtenir le copolymère glyoxalé 3b.

### Exemple 10 (contre-exemple) :

### Synthèse du copolymère 4

Dans un réacteur de 1 litre équipé d'un agitateur mécanique, d'un thermomètre, d'un réfrigérant et d'une canne plongeante d'azote gazeux, on introduit 621g d'eau, 89,5g de chlorure de diméthyldiallyl ammonium (DADMAC 64% en poids dans l'eau). Le pH est ajusté à 2,5 avec du H₂SO₄. Le milieu est chauffé et maintenu à une température comprise entre 79 et 81 °C grâce à un bain-marie. Grace à deux coulées continues, on incorpore 285,4g d'acrylamide 50% (solution à 50% en poids dans l'eau) en coulée continue pendant 90 minutes et une solution de persulfate de sodium pendant 90 minutes. 1g d'agent de transfert de chaine (hypophosphite de sodium) est alors ajouté et après 30 minutes de vieillissement, 0,26g de bisulfite de sodium (solution à 40% en poids dans l'eau) sont additionnés pour faire réagir les éventuels monomères résiduels. Un nouveau vieillissement de 60 minutes est appliqué avant refroidissement. La solution de copolymère 4 obtenue présente un pH de 4,9, un extrait sec de 20,5% et une viscosité de 1700cps.

### Synthèse du copolymère glyoxalé 4

Dans un réacteur de 1 litre équipé d'un agitateur mécanique, on introduit 69,6g de copolymère 4 et 725,2g d'eau. Le réacteur est muni d'une sonde de pH. Après 10 minutes d'agitation, le pH est ajusté à 10,4 avec une solution de soude à 10%. La température est maintenue entre 20 et 22°C. 5,22g de glyoxal à 40% en poids dans l'eau sont additionnés. Le contrôle du pH et le suivi de la viscosité permettent d'obtenir un produit à 53 cps. On stoppe la réaction par un abaissement du pH à moins de 3,5 par addition de H₂SO₄ à 92% dans l'eau pour obtenir le copolymère glyoxalé 4. Le copolymère glyoxalé 4 correspond à l'art antérieur US 9,644,320.

### Procédures de tests d'évaluations

### Pâte fibres recyclées (utilisée dans tous les exemples applicatifs) :

La pâte humide est obtenue par désintégration de pâte sèche afin d'obtenir une concentration aqueuse finale de 1% massique. Il s'agit d'une pâte à pH neutre composée à 100% de fibres de cartons recyclées.

### Evaluation des performances d'égouttage sous vide (DDA)

Le DDA (Dynamic Drainage Analyzer) permet de déterminer, de manière automatique, le temps (en secondes) nécessaire pour égoutter sous vide une suspension fibreuse. Les polymères sont ajoutés à la pâte humide (0,6 litre de pâte à 1,0 % massique dans l'eau) dans le cylindre du DDA sous agitation à 1000 tours par minute :
T=0s : mise en agitation de la pâte
T=10s : ajout de l'additif
T=30s : arrêt de l'agitation et égouttage sous vide à 200mBar pendant 60s.

La pression sous la toile est enregistrée en fonction du temps. Lorsque toute l'eau est évacuée du matelas fibreux, l'air passe à travers celui-ci faisant apparaitre une rupture de pente sur la courbe représentant la pression sous toile en fonction du temps. Le temps, exprimé en secondes, relevé à cette rupture de pente correspond au temps d'égouttage. Plus le temps est faible, meilleur est donc l'égouttage sous vide.

### Fabrication des formettes, grammage à 90g.m⁻²

La quantité nécessaire de pâte est prélevée de manière à obtenir au final une feuille présentant un grammage de 90g.m⁻².

La pâte humide est introduite dans le cuvier de la formette dynamique et est maintenue sous agitation. On injecte à cette pâte les différents composants du système selon la séquence prédéfinie. On respecte généralement un temps de contact de 45 secondes entre chaque ajout de polymère.

Des formettes de papier sont réalisées avec une formette dynamique automatique : un buvard et la toile de formation sont placés dans le bol de la formette dynamique avant de démarrer la rotation du bol à 1000 tr/min et de construire le mur d'eau. La pâte traitée est répartie sur le mur d'eau pour former le matelas fibreux sur la toile de formation.

Une fois que l'eau est drainée, le matelas fibreux est récupéré, pressé sous une presse délivrant 4 bars, puis séché à 117°C. La feuille obtenue est conditionnée pendant une nuit dans une pièce à humidité et température contrôlées (50% d'humidité relative et 23°C). Les propriétés de résistance mécanique de toutes les feuilles obtenues par cette procédure sont alors mesurées.

### Performances de résistance mécanique du papier :

L'éclatement est mesuré avec un éclatomètre Messmer Buchel M 405 selon la norme TAPPI T403 om-02. Le résultat est exprimé en kPa. On détermine l'indice d'éclatement, exprimé en kPa.m²/g, en divisant cette valeur par le grammage de la feuille testée.

Les longueurs de rupture à l'état sec et à l'état humide sont mesurées dans le sens machine avec un appareil de traction Testometric AX selon la norme TAPPI T494 om-01. Le résultat est exprimé en km.

Quelles que soient les caractéristiques évaluées, on exprime un pourcentage d'amélioration de performances pour chaque polymère, par rapport aux mêmes conditions sans ajout dudit polymère.

Les polymères évalués ci-après sont dosés à hauteur de 1,5kg/t de polymère actif par rapport aux fibres sèches.

Dans le cas de polymères anioniques, ceux-ci sont testés en combinaison avec, au préalable, de la PAE (polyamidoamine epichlorhydrine) dosée à 3kg/t de matière sèche par rapport aux fibres sèches.

**Tableau 1 : comparaison entre des copolymères complexes et des additifs selon l'invention**

| Produit | Ionicité (%mol) | % Amélioration | | | |
|---|---|---|---|---|---|
| | | DDA | Indice d'éclatement | Longueur de rupture sec (sens marche) | Longueur de rupture humide (sens marche) |
| Polymère complexe 1 | -15 | 2,4 | 12,4 | 9,6 | 23,5 |
| Additif 1 | -15 | 35,4 | 23,7 | 13,5 | 52,9 |
| Polymère complexe 2 | 5 | 3,0 | 5,5 | 2,2 | - |
| Additif 2a | 5 | 18,0 | 16,3 | 12,9 | - |
| Additif 2b | 5 | 22,9 | 23,5 | 15,1 | - |
| Polymère complexe 3 | 20 | 6,4 | 7,3 | 3,7 | - |
| Additif 3a | 20 | 28,7 | 20,8 | 14,0 | - |
| Additif 3b | 20 | 57,6 | 32,1 | 16,2 | - |

Il est clairement démontré dans le tableau 1 que les additifs selon l'invention, correspondant à la glyoxalation d'un copolymère complexe, quelles que soient leurs concentrations, apportent une amélioration des performances d'égouttage sous vide ainsi que des propriétés physiques du papier (indice d'éclatement et longueur de rupture à l'état sec et à l'état humide), par rapport au polymère complexe n'ayant pas subi de glyoxalation.

**Tableau 2 : comparaison pour une anionicité égale à 15%mol entre un additif et un copolymère glyoxalé à base d'un copolymère linéaire**

| Produit | % Amélioration | | | |
|---|---|---|---|---|
| | DDA | Indice d'éclatement | Longueur de rupture sec (sens marche) | Longueur de rupture humide (sens marche) |
| Additif 1 | 35,4 | 23,7 | 13,5 | 52,9 |
| Copolymère glyoxalé 1 | 34,8 | 22,1 | 13,1 | 51,0 |

**Tableau 3 : comparaison pour une cationicité égale 5%mol entre un additif selon l'invention, un copolymère glyoxalé à base d'un copolymère linéaire et un produit issu de la glyoxalation du mélange correspondant.**

| Produit | % Amélioration | | |
|---|---|---|---|
| | DDA | Indice d'éclatement | Longueur de rupture sec (sens marche) |
| Additif 2a | 18,0 | 16,3 | 12,9 |
| Additif 2b | 22,9 | 23,5 | 15,1 |
| Copolymère glyoxalé 2a | 15,2 | 15,4 | 12,5 |
| Copolymère glyoxalé 2b | 18,9 | 18,1 | 10,8 |
| Mélange glyoxalé 2b | 18,6 | 18,3 | 10,6 |

**Tableau 4: comparaison pour une cationicité égale à 20%mol entre des additifs selon l'invention et des copolymères glyoxalés à base d'un copolymère conventionnel linéaire**

| Produit | % Amélioration | | |
|---|---|---|---|
| | DDA | Indice d'éclatement | Longueur de rupture sec (sens marche) |
| Additif 3a | 28,7 | 20,8 | 14,0 |
| Additif 3b | 57,6 | 32,1 | 16,2 |
| Copolymère glyoxalé 3a | 26,8 | 19,4 | 13,1 |
| Copolymère glyoxalé 3b | 54,0 | 28,0 | 13,6 |

On établit nettement dans les tableaux 2, 3 et 4 que les additifs de l'invention, toutes choses égales par ailleurs (concentration de glyoxalation, ionicité), apportent un bénéfice en termes de performances d'égouttage sous vide ainsi que de propriétés mécaniques du papier (indice d'éclatement, longueur de rupture à l'état sec et à l'état humide) par rapport aux copolymères glyoxalés issus de polymères conventionnels de type linéaire, ou ramifié préalablement modifié avec un polyéthylénimine, ou au produit de glyoxalation du mélange correspondant.

**Tableau 5 : comparaison pour une cationicité égale à 15%mol entre des additifs selon l'invention et un copolymère glyoxalé à base d'un copolymère linéaire.**

| Produit | % en polymère hôte | % Amélioration | | |
|---|---|---|---|---|
| | | DDA | Indice d'éclatement | Longueur de rupture sec (sens marche) |
| Additif 4 | 2% | 44,8 | 27,1 | 12,3 |
| Additif 5 | 5% | 45,4 | 29,4 | 13,8 |
| Additif 6 | 10% | 46,6 | 30,7 | 15,3 |
| Copolymère glyoxalé 4 | Linéaire (0 %) | 41,5 | 24,9 | 10,6 |

Dans le tableau 5, on observe bien l'effet technique apporté par l'invention sur les performances d'égouttage sous vide et de résistance mécanique de la feuille de papier (éclatement et longueur de rupture à l'état sec). En effet, les gains de performances sont d'autant plus marqués que la quantité de polymère hôte dans le copolymère complexe augmente.

## Revendications

1. Additif à base de (co)polymères issus de la réaction entre au moins un composé dialdéhyde et au moins un (co)polymère complexe obtenu par polymérisation de monomères hydrosolubles en présence d'au moins un (co)polymère hôte comprenant des fonctions vinylamine.

2. Additif selon la revendication 1, **caractérisé en ce que** le dialdéhyde est choisi parmi le glyoxal, le dialdéhyde malonique, le dialdéhyde succinique, le glutaraldéhyde, le dialdéhyde adipique, le dialdéhyde 2-hydroxyadipique, le dialdéhyde pimélique, le dialdéhyde subérique, le dialdéhyde azélaïque, le dialdéhyde sébacique, le dialdéhyde maléique, le dialdéhyde fumarique, le phtaldialdéhyde, l'isophthaldialdéhyde, le teréphthaldialdéhyde et le 1,4-diformylcyclohexane et leurs combinaisons.

3. Additif selon l'une des revendications précédentes **caractérisé en ce que** la polymérisation du au moins un monomère hydrosoluble s'effectue en présence d'au moins un agent de transfert non polymérique et en l'absence d'agent ramifiant ou réticulant de type polyfonctionnel éthylénique.

4. Additif selon la revendication 3, **caractérisé en ce que** l'agent de transfert a un poids moléculaire inférieur à 200 g/mol

5. Additif selon la revendication3 ou 4, **caractérisé en ce que** l'agent de transfert est choisi dans le groupe comprenant l'alcool isopropylique, l'hypophosphite de sodium, et le mercaptoéthanol.

6. Additif selon l'une des revendications précédentes, **caractérisé en ce que** le polymère hôte comprenant des fonctions vinylamine est issu de l'hydrolyse d'un (co)polymère base de N vinylformamide.

7. Additif selon l'une des revendications 1 à 5, **caractérisé en ce que** le polymère hôte comprenant des fonctions vinylamine est issu de la réaction de dégradation d'Hofmann sur un (co)polymère base.

8. Additif selon la revendication 7, **caractérisé en ce que** le (co)polymère base comprend au moins un monomère non ionique choisi dans le groupe comprenant l'acrylamide et ses dérivés.

9. Additif selon l'une des revendications précédentes, **caractérisé en ce que** les monomères constitutifs du polymère hôte et le ou les monomères hydrosolubles sont choisis dans le groupe comprenant :
- au moins un monomère parmi l'acrylamide ; la méthacrylamide ; le N-isopropylacrylamide ; le N-méthyl méthacrylamide ; le N,N-diméthylacrylamide ; la N-vinylformamide ; la N-vinylpyrrolidone ; et l'acrylonitrile ; et/ou
- au moins un monomère parmi les sels d'ammonium quaternaires de l'acrylate de diméthylaminoéthyle (ADAME) ; les sels d'ammonium quaternaires du méthacrylate de diméthylaminoéthyle (MADAME) ; le chlorure de diméthyldiallylammonium (DADMAC) ; le chlorure d'acrylamido propyltriméthyl ammonium (APTAC) ; et le chlorure de méthacrylamido propyltriméthyl ammonium (MAPTAC) ; et/ou
- au moins un monomère parmi l'acide acrylique ; l'acide méthacrylique ; l'acide itaconique ; l'acide crotonique ; l'acide maléique ; l'acide fumarique ; l'acide 2-acrylamido 2-méthylpropane sulfonique ; l'acide vinylsulfonique ; l'acide vinylphosphonique ; l'acide allylsulfonique ; l'acide allylphosphonique ; l'acide styrène sulfonique ; les sels hydrosolubles d'un métal alcalin, d'un métal alcalino terreux, ou d'ammonium de ces monomères.

10. Procédé de préparation d'un additif à base de polymères comprenant les étapes suivantes :
a/ Préparation d'au moins un (co)polymère base composé d'au moins un monomère non ionique,
b/ Préparation d'au moins un (co)polymère hôte obtenu par dégradation dite d'Hofmann effectuée sur au moins un (co)polymère base obtenu en étape a/,
c/ Préparation d'au moins un (co)polymère complexe par polymérisation de monomères hydrosolubles en présence d'au moins un (co)polymère hôte obtenu en étape b/,
d/ Préparation d'un additif issu de la réaction entre au moins un dialdéhyde et au moins un (co)polymère complexe obtenu en étape c/.

11. Procédé de préparation d'un additif à base de polymères comprenant les étapes suivantes :
a/ Préparation d'au moins un (co)polymère base de N-vinylformamide,
b/ Préparation d'au moins un (co)polymère hôte obtenu par l'hydrolyse au moins partielle du (co)polymère de N vinylformamide obtenu en étape a/,
c/ Préparation d'au moins un (co)polymère complexe par polymérisation de monomères hydrosolubles en présence d'au moins un (co)polymère hôte obtenu en étape b/,
d/ Préparation d'un additif issu de la réaction entre au moins un dialdéhyde et au moins un (co)polymère complexe obtenu en étape c/.

12. Procédé de fabrication de papier, carton ou analogues, selon lequel, avant formation de ladite feuille, on ajoute à la suspension fibreuse, en un ou plusieurs points d'injection au moins un additif selon l'une des revendications 1 à 9.

## Patentansprüche

1. Additiv auf Basis von (Co)polymeren, die aus der Reaktion zwischen mindestens einer Dialdehydverbindung und mindestens einem komplexen (Co)polymer resultieren, das durch Polymerisation von wasserlöslichen Monomeren in Gegenwart mindestens eines Wirts(co)polymers mit Vinylaminfunktionen erhalten wird.

2. Additiv gemäß Anspruch 1, **dadurch gekennzeichnet, dass** das Dialdehyd aus Glyoxal, Malonsäuredialdehyd, Bernsteinsäuredialdehyd, Glutaraldehyd, Adipinsäuredialdehyd, 2-Hydroxyadipinsäuredialdehyd, Pimelinsäuredialdehyd, Korksäuredialdehyd, Azelainsäuredialdehyd, Sebacinsäuredialdehyd, Maleinsäuredialdehyd, Fumarsäuredialdehyd, Phthaldialdehyd, Isophthaldialdehyd, Terephthaldialdehyd und 1,4-Diformylcyclohexan sowie Kombinationen davon ausgewählt ist.

3. Additiv gemäß einem der vorstehenden Ansprüche, **dadurch gekennzeichnet, dass** die Polymerisation des mindestens einen wasserlöslichen Monomers in Gegenwart mindestens eines nicht-polymeren Transfermittels und in Abwesenheit eines Verzweigungs- oder Vernetzungsmittels vom polyfunktionellen ethylenischen Typ erfolgt.

4. Additiv gemäß Anspruch 3, **dadurch gekennzeichnet, dass** das Transfermittel ein Molekulargewicht von weniger als 200 g/mol hat.

5. Additiv gemäß Anspruch 3 oder 4, **dadurch gekennzeichnet, dass** das Transfermittel aus der Gruppe ausgewählt ist, die Isopropylalkohol, Natriumhypophosphit und Mercaptoethanol umfasst.

6. Additiv gemäß einem der vorstehenden Ansprüche, **dadurch gekennzeichnet, dass** das Vinylaminfunktionen umfassende Wirtspolymer durch Hydrolyse eines N-Vinylformamid-Basis(co)polymers entsteht.

7. Additiv gemäß einem der Ansprüche 1 bis 5, **dadurch gekennzeichnet, dass** das Vinylaminfunktionen umfassende Wirtspolymer durch Hofmann-Abbaureaktion auf einem Acrylamid-Basis(co)polymer entsteht.

8. Additiv gemäß Anspruch 7, **dadurch gekennzeichnet, dass** das Basis(co)polymer mindestens ein nichtionisches Monomer umfasst, welches aus der Gruppe ausgewählt ist, die Acrylamid und dessen Derivate umfasst.

9. Additiv gemäß einem der vorstehenden Ansprüche, **dadurch gekennzeichnet, dass** die das Wirtspolymer bildenden Monomere und das oder die wasserlöslichen Monomere aus der Gruppe ausgewählt sind, die Folgendes umfasst:
- mindestens ein Monomer von Acrylamid; Methacrylamid; N-Isopropylacrylamid; N-Methylmethacrylamid; N,N-Dimethylacrylamid; N-Vinylformamid; N-Vinylpyrrolidon; und Acrylnitril; und/oder
- mindestens ein Monomer von quartären Ammoniumsalzen von Dimethylaminoethylacrylat (ADAME); quartären Ammoniumsalzen von Dimethylaminoethylmethacrylat (MADAME); Dimethyldiallylammoniumchlorid (DADMAC); Acrylamidopropyltrimethylammoniumchlorid (APTAC); und Methacrylamidopropyltrimethylammoniumchlorid (MAPTAC); und/oder
- mindestens ein Monomer von Acrylsäure; Methacrylsäure; Itaconsäure; Crotonsäure; Maleinsäure; Fumarsäure; 2-Acrylamido-2-methylpropansulfonsäure; Vinylsulfonsäure; Vinylphosphonsäure; Allylsulfonsäure; Allylphosphonsäure; Styrolsulfonsäure; die wasserlöslichen Alkalimetall-, Erdalkalimetall- oder Ammoniumsalze dieser Monomere.

10. Verfahren zur Herstellung eines Additivs auf Polymerbasis, umfassend die folgenden Schritte:
a/ das Herstellen mindestens eines Basis(co)polymers, das aus mindestens einem nichtionischen Monomer besteht,
b/ das Herstellen mindestens eines Wirts(co)polymers, das durch sogenannten Hofmann-Abbau erhalten wird, der an mindestens einem in Schritt a/ erhaltenen Basis(co)polymer durchgeführt wird,
c/ das Herstellen mindestens eines komplexen (Co)polymers durch Polymerisation von wasserlöslichen Monomeren in Gegenwart mindestens eines in Schritt b/ erhaltenen Wirts(co)polymers,
d/ das Herstellen eines Additivs, das aus der Reaktion zwischen mindestens einem Dialdehyd und mindestens einem in Schritt c/ erhaltenen komplexen (Co)polymer resultiert.

11. Verfahren zur Herstellung eines Additivs auf Polymerbasis, umfassend die folgenden Schritte:
a/ das Herstellen mindestens eines N-Vinylformamid-Basis(co)polymers,
b/ das Herstellen mindestens eines Wirts(co)polymers, das durch zumindest teilweise Hydrolyse des in Schritt a/ erhaltenen N-Vinylformamid-(Co)polymers erhalten wird,
c/ das Herstellen mindestens eines komplexen (Co)polymers durch Polymerisation von wasserlöslichen Monomeren in Gegenwart mindestens eines in Schritt b/ erhaltenen Wirts(co)polymers,
d/ das Herstellen eines Additivs, das aus der Reaktion zwischen mindestens einem Dialdehyd und mindestens einem in Schritt c/ erhaltenen komplexen (Co)polymer resultiert.

12. Verfahren zur Herstellung von Papier, Karton oder dergleichen, gemäß dem vor der Bildung des Blatts mindestens ein Additiv gemäß einem der Ansprüche 1 bis 9 an einem oder mehreren Einspritzpunkten zu der Fasersuspension hinzugefügt wird.

## Claims

1. An additive based on (co)polymers resulting from the reaction between at least one dialdehyde compound and at least one complex (co)polymer obtained by polymerization of water-soluble monomers in the presence of at least one host (co)polymer comprising vinylamine functions.

2. The additive according to claim 1, **characterized in that** the dialdehyde is selected from glyoxal, malonic dialdehyde, succinic dialdehyde, glutaraldehyde, adipic dialdehyde, 2-hydroxyadipic dialdehyde, pimelic dialdehyde, suberic dialdehyde, azelaic dialdehyde, sebacic dialdehyde, maleic dialdehyde, fumaric dialdehyde, phthalic dialdehyde, isophthalic dialdehyde, terephthalic dialdehyde and 1,4-diformylcyclohexane and combinations thereof.

3. The additive according to one of the preceding claims, **characterized in that** the polymerization of the at least one water-soluble monomer is carried out in the presence of at least one non-polymeric transfer agent and in the absence of branching or crosslinking agent of polyfunctional ethylene type.

4. The additive according to claim 3, **characterized in that** the transfer agent has a molecular weight of less than 200 g/mol.

5. The additive according to claim 3 or 4, **characterized in that** the transfer agent is selected from the group comprising isopropyl alcohol, sodium hypophosphite and mercaptoethanol.

6. The additive according to one of the preceding claims, **characterized in that** the host polymer comprising vinylamine functions results from the hydrolysis of an N-vinylformamide base (co)polymer.

7. The additive according to one of claims 1 to 5, **characterized in that** the host polymer comprising vinylamine functions results from the Hofmann degradation reaction on a base (co)polymer.

8. The additive according to claim 7, **characterized in that** the base (co)polymer comprises at least one nonionic polymer selected from the group comprising acrylamide and derivatives thereof.

9. The additive according to one of the preceding claims, **characterized in that** the monomers constituting the host polymer and the water-soluble monomer(s) are selected from the group comprising:
- at least one monomer from acrylamide, methacrylamide, N-isopropylacrylamide, N-methylmethacrylamide, N,N-dimethylacrylamide, N-vinylformamide, N-vinylpyrrolidone and acrylonitrile; and/or
- at least one monomer from quaternary ammonium salts of dimethylaminoethyl acrylate (DMAEA), quaternary ammonium salts of dimethylaminoethyl methacrylate (DMAEMA), diallyldimethylammonium chloride (DADMAC), acrylamidopropyltrimethyl ammonium chloride (APTAC) and methacrylamidopropyltrimethylammonium chloride (MAPTAC); and/or
- at least one monomer from acrylic acid, methacrylic acid, itaconic acid, crotonic acid, maleic acid, fumaric acid, 2-acrylamido2-methylpropanesulfonic acid, vinylsulfonic acid, vinylphosphonic acid, allylsulfonic acid, allylphosphonic acid, styrenesulfonic acid; the water-soluble salts of an alkali metal, of an alkaline-earth metal or of ammonium of these monomers.

10. A process for preparing an additive based on polymers, comprising the following steps:
a/ Preparation of at least one base (co)polymer composed of at least one nonionic monomer,
b/ Preparation of at least one host (co)polymer obtained by what is referred to as Hofmann degradation carried out on at least one base (co)polymer obtained in step a/,
c/ Preparation of at least one complex (co)polymer by polymerization of water-soluble monomers in the presence of at least one host (co)polymer obtained in step b/,
d/ Preparation of an additive resulting from the reaction between at least one dialdehyde and at least one complex (co)polymer obtained in step c/.

11. A process for preparing an additive based on polymers, comprising the following steps:
a/ Preparation of at least one N-vinylformamide base (co)polymer,
b/ Preparation of at least one host (co)polymer obtained by at least partial hydrolysis of the N-vinylformamide (co)polymer obtained in step a/,
c/ Preparation of at least one complex (co)polymer by polymerization of water-soluble monomers in the presence of at least one host (co)polymer obtained in step b/,
d/ Preparation of an additive resulting from the reaction between at least one dialdehyde and at least one complex (co)polymer obtained in step c/.

12. A process for manufacturing paper, card or similar, according to which, before formation of said sheet, at least one additive according to one of claims 1 to 9 is added to the fibrous suspension at one or more injection points.
